# EUROPEAN PATENT APPLICATION

(11) **EP 4 592 828 A1**
(43) Date of publication of application: **30.07.2025**
(21) Application number: 23876433.6
(22) Date of filing: 12.09.2023
(51) Int. Cl.: G06F 9/38

(54) **INSTRUCTION ISSUING METHOD AND APPARATUS BASED ON COMPRESSION-TYPE ISSUE QUEUE, DEVICE AND MEDIUM**

(30) Priority: 11.10.2022 CN 202211242740
(71) Applicant: Sanechips Technology Co., Ltd., Shenzhen, Guangdong 518055 (CN)
(72) Inventor: WANG, Tao, Shenzhen, Guangdong 518055 (CN)
(74) Representative: Canzler & Bergmeier Patentanwälte Partnerschaft mbB
(86) International application number: PCT/CN2023/118183
(87) International publication number: WO 2024/078228

(57) **Abstract**

The present application provides an instruction issuing method and apparatus based on a compression-type issue queue, a terminal device and a computer storage medium. The method comprises: storing an instruction to be processed in an instruction cache of a compression-type issue queue, and adding an available pointer associated with said instruction into a pointer shift queue of the compression-type issue queue, wherein the available pointer pops up from the head of a pointer idle list of the compression-type issue queue; when said instruction meets a dequeuing condition, determining a sort order of the available pointer in the pointer shift queue; and issuing, according to the sort order, said instruction from the instruction cache to a corresponding function unit for processing, and recycling the available pointer from the pointer shift queue to the tail of the pointer idle list.

## Description

### CROSS-REFERENCE TO RELATED APPLICATIONS

This application claims the priority of Chinese patent application No. 202211242740.7 filed on October 11, 2022, the entirety of which is incorporated hereby by reference.

### TECHNICAL FIELD

The present application relates to the technical field of processors, and particularly relates to an instruction issuing method and apparatus based on compressed issue queue, a terminal device and a computer storage medium.

### BACKGROUND

Current superscalar processors typically employ a deeper pipeline design than the conventional five-stage pipeline, and have a variety of function units that can be used for parallel execution. In order to increase the utilization rate of each function unit and thus to increase the instruction per clock (IPC), the superscalar processor usually adopts an out-of-order issuing method to issue instructions in an issue queue to function units for execution.

The existing methods for issuing instructions to function units by means of an issue queue with a compressed structure all involve: preferably selecting and issuing the oldest instruction among all prepared instructions in a queue buffer to a function unit for execution, and once a certain instruction in the queue is issued, each instruction in the queue buffered on an entry in the list has to be moved. Therefore, in the existing instruction issuing methods, the data movement power consumption required for moving instructions in the issue queue by the processor is increased.

### SUMMARY

The present application provides an instruction issuing method based on compressed issue queue, the method including: storing an instruction to be processed in an instruction buffer of a compressed issue queue, and adding an available pointer associated with the instruction to be processed into a pointer shift queue of the compressed issue queue, wherein the available pointer is popped from a head of a pointer freelist of the compressed issue queue; determining, when the instruction to be processed meets a dequeue condition, an order of the available pointer in the pointer shift queue; and issuing, according to the order, the instruction to be processed from the instruction buffer to a corresponding function unit for processing, and recycling the available pointer from the pointer shift queue to a tail of the pointer freelist.

The present application further provides an instruction issuing apparatus based on compressed issue queue, which includes the following function modules: a pointer management module configured to store an instruction to be processed in an instruction buffer of a compressed issue queue, and add an available pointer associated with the instruction to be processed into a pointer shift queue of the compressed issue queue, wherein the available pointer is popped from a head of a pointer freelist of the compressed issue queue; an instruction issuing module configured to: determine, when the instruction to be processed meets a dequeue condition, an order of the available pointer in the pointer shift queue; and issue, according to the order, the instruction to be processed from the instruction buffer to a corresponding function unit for processing, and recycle the available pointer from the pointer shift queue to a tail of the pointer freelist.

The function modules of the instruction issuing apparatus based on compressed issue queue, when operated, implements operations of the instruction issuing method based on compressed issue queue as described above.

The present application further provides a terminal device, including: a memory, a processor, and an instruction issuing program based on compressed issue queue, which is stored on the memory and executable by the processor, where the instruction issuing program based on compressed issue queue, when executed by the processor, causes operations of the instruction issuing method based on compressed issue queue as described above to be implemented.

The present application further provides a computer storage medium having an instruction issuing program based on compressed issue queue stored thereon which, when executed by a processor, causes operations of the instruction issuing method based on compressed issue queue as described above to be implemented.

The present application further provides a computer program product including a computer program which, when executed by a processor, causes operations of the instruction issuing method based on compressed issue queue as described above to be implemented.

### BRIEF DESCRIPTION OF DRAWINGS

FIG. 1 is a schematic device structure diagram of a hardware operating environment of a terminal device according to an embodiment of the present application;
FIG. 2 is a schematic structural diagram of a compressed issue queue involved in an instruction issuing method based on compressed issue queue in the existing art;
FIG. 3 is a schematic structural diagram of a non-compressed issue queue involved in the instruction issuing method based on compressed issue queue in the existing art;
FIG. 4 is a schematic flowchart of operations in an instruction issuing method based on compressed issue queue according to an embodiment of the present application;
FIG. 5 is a schematic diagram of a pointer-based compressed-type out-of-order issue queue involved in an instruction issuing method based on compressed issue queue according to an embodiment of the present application;
FIG. 6 is a working flow chart of a pointer-based compressed-type out-of-order issue queue involved in an instruction issuing method based on compressed issue queue according to an embodiment of the present application;
FIG. 7 is a working state chart of a pointer-based compressed-type out-of-order issue queue involved in an instruction issuing method based on compressed issue queue according to an embodiment of the present application;
FIG. 8 is a schematic diagram illustrating an instruction arbiter performing arbitration according to an oldest-first method involved in an instruction issuing method based on compressed issue queue according to an embodiment of the present application; and
FIG. 9 is a schematic structural diagram of function modules in an instruction issuing apparatus based on compressed issue queue according to an embodiment of the present application.

The implementation, functional features and advantages of the objects of the present application will be further explained with reference to the embodiments, and with reference to the accompanying drawings.

### DETAIL DESCRIPTION OF EMBODIMENTS

It will be appreciated that the specific embodiments described herein are merely for illustration of the present application and are not intended to limit the present application.

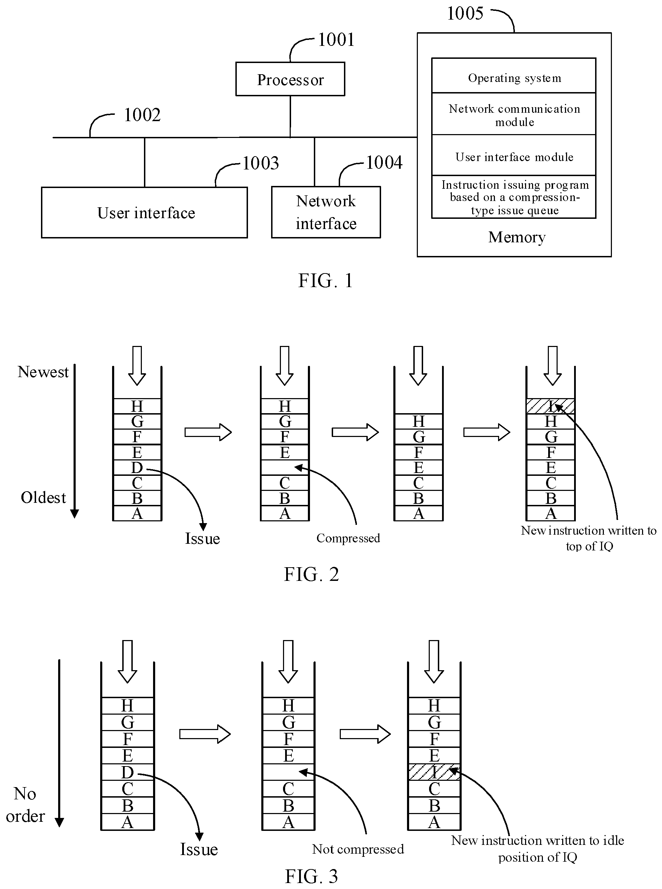

Referring to FIG. 1, a schematic device structure diagram of a hardware operating environment of a terminal device according to an embodiment of the present application is shown. It should be noted that the terminal device in the embodiments of the present application may be a personal computer (PC), a tablet, a portable computer, a smart phone, or the like.

As shown in FIG. 1, the terminal device may include: a processor 1001 (e.g., a CPU, an SOC chip), a communications bus 1002, a user interface 1003, a network interface 1004, and a memory 1005. The communication bus 1002 is used to implement connection and communication between these components.. The user interface 1003 may include a display, an input unit such as a keyboard, and optionally a standard wired or wireless interface. Optionally, the network interface 1004 may include a standard wired or wireless interface (e.g., a Wi-Fi interface). The memory 1005 may be a high-speed RAM memory or a non-volatile memory such as disk storage. The memory 1005 may optionally be a storage device independent of the aforementioned processor 1001.

It will be understood by those skilled in the art that the configuration shown in FIG. 1 does not constitute a limitation to the terminal device, and the terminal device of the present application may include more or fewer components than shown, or a combination of certain components, or a different arrangement of components.

As shown in FIG. 1, the memory 1005, as an example of the computer storage medium, may include an operating system, a network communication module, a user interface module, and an instruction issuing program based on compressed issue queue.

In the terminal shown in FIG. 1, the network interface 1004 is mainly configured to connect and perform data communication with a backend server or other devices. The user interface 1003 is mainly configured to connect and perform data communication with a client. The processor 1001 is configured to call the instruction issuing program based on compressed issue queue stored on the memory 1005, and perform the operations of: storing an instruction to be processed in an instruction buffer of a compressed issue queue, and adding an available pointer associated with the instruction to be processed into a pointer shift queue of the compressed issue queue, wherein the available pointer is popped from a head of a pointer freelist of the compressed issue queue; determining, when the instruction to be processed meets a dequeue condition, an order of the available pointer in the pointer shift queue; and issuing, according to the order, the instruction to be processed from the instruction buffer to a corresponding function unit for processing, and recycling the available pointer from the pointer shift queue to a tail of the pointer freelist.

In some feasible embodiments, the processor 1001 may be further configured to call the instruction issuing program based on compressed issue queue stored on the memory 1005, where after recycling the available pointer from the pointer shift queue to the tail of the pointer freelist, the processor 1001 may further perform the operations of: determining, according to the order, whether there are any remaining pointers behind (or after) the available pointer in the pointer shift queue; and in response to determining that there are remaining pointers behind (or after) the available pointer in the pointer shift queue, compressing the remaining pointers.

In some feasible embodiments, the processor 1001 may be further configured to call the instruction issuing program based on compressed issue queue stored on the memory 1005, and perform the operations of: establishing, upon receiving the instruction to be processed, an association relationship between the instruction to be processed and the available pointer, wherein the available pointer is popped from the head of the pointer freelist at a current moment; and determining a buffer address pointed to by the available pointer in the instruction buffer of the compressed issue queue, and storing the instruction to be processed on the buffer address.

In some feasible embodiments, the processor 1001 may be further configured to call the instruction issuing program based on compressed issue queue stored on the memory 1005, and perform the operations of: determining, in entries of a pointer shift queue of the compressed issue queue, a first target entry arranged immediately behind entries containing pointers; and adding the available pointer associated with the instruction to be processed to the target entry.

In some feasible embodiments, the processor 1001 may be further configured to call the instruction issuing program based on compressed issue queue stored on the memory 1005, where before adding the available pointer associated with the instruction to be processed into the pointer shift queue of the compressed issue queue, the processor 1001 may further perform the operation of: initializing the pointer freelist of the compressed issue queue to make all entries in the pointer freelist be in a full state.

In some feasible embodiments, the full state is a state in which each entry in the pointer freelist has a pointer stored thereon, and the processor 1001 may be further configured to call the instruction issuing program based on compressed issue queue stored on the memory 1005, and perform the operation of: upon receiving the instruction to be processed, popping a pointer stored on a head entry of the entries as a free available pointer.

In some feasible embodiments, the processor 1001 may be further configured to call the instruction issuing program based on compressed issue queue stored on the memory 1005, and perform the operations of: determining an empty entry at the tail of the pointer freelist from the entries in the pointer freelist; and storing the available pointer on the empty entry to recycle the available pointer from the pointer shift queue to the tail of the pointer freelist.

Based on the above hardware structure, the overall concept of the instruction issuing method based on compressed issue queue of the present application is proposed.

In the existing art, the central processing unit (CPU) of a terminal device generally adopts a pipeline design concept. For example, the conventional five-stage pipeline divides an execution process of an instruction into several stages including instruction fetch, instruction decode, execution, memory access and write back, and specialized circuits are designed to execute different stages of different instructions in parallel, so as to increase the throughput rate of the CPU. As the frequency pursued by CPU increases, the processing time of each pipeline stage decreases, modern superscalar processors typically employ deeper pipeline designs, such as Arm Cortex A72, Neoverse N1, and so on, each of which has more than 10 stages in pipeline. For superscalar processors, the pipeline is often divided into instruction fetch, instruction decode, rename, dispatch, issue, execution, write back, commit and so on. The superscalar processor may have various types of function units, such as an arithmetic and logic unit (ALU), a multiplier, a divider, a branch unit (BU), a load and store unit (LSU), and so on, and processings of different types of function units may be executed in parallel, so that the instructions per cycle (IPC) can be more than 1. To increase the utilization rate of these function units and further improve the IPC, the superscalar processor often adopts an out-of-order issuing method, and once all operands of an instruction in the issue queue are ready and the corresponding function unit is free, the instruction is issued to the corresponding function unit without waiting for issue of a preceding instruction that is not ready.

In the pipeline of the superscalar processor, hardware for the issue stage is relatively complicated, and timing of the hardware, which is typically on a critical path in the processor, may directly affect the cycle time of the processor. Therefore, the hardware is further split into, for example, an allocation circuit, a wake-up circuit and an arbitration circuit. The allocation circuit is configured to find a free position in the issue queue for storing a newly sent instruction; the wake-up circuit is configured to notify result data executed by a function unit to all instructions waiting for the data in the issue queue; and the arbitration circuit is configured to find the most suitable instruction from the issue queue according to a certain rule, and issue the instruction to a function unit for execution. It can be seen that the component located at the "center position" of the issue stage is the issue queue, and its implementation directly determines the implementation of the whole issue stage.

Depending on the working mode, the issue queues may be classified into two structures: a compressed structure and a non-compressed structure. The two structures will directly determine the difficulty in design of other components at the issue stage, and affect the power consumption of the processor.

As shown in FIG. 2, for a compressed issue queue in the existing art, each time an instruction is selected and exits the issue queue, a "gap" will occur, and all instructions above the instruction will move down by one space to fill up the "gap" caused by the instruction. The compressed issue queue has several advantages: first, to ensure that the processor can execute instructions in parallel to the maximum extent, generally, the oldest instruction among the all ready instructions is selected and sent to a function unit for execution, which could release all instructions having a read after write (RAW) dependency with the oldest instruction to the maximum extent, which is also called the oldest-first method, whereas the instructions in the compressed issue queue have been naturally arranged in the order of "newest → oldest", so that an instruction near the head of the issue queue can be simply selected for issue, which can greatly simplify the arbitration circuit. Second, the compressed issue queue is also very friendly to the allocation circuit, and a new instruction can be directly added to the tail of the queue. Although the compressed issue queue can reduce the design complexity of the arbitration circuit and the allocation circuit, the area and power consumption of the issue queue are increased, because: to realize this compression mode, the content of each entry in the issue queue should be able to be moved to a next entry, and therefore, a multiplexer has to be added in front of each entry to select one of: a preceding entry (when compressed), the current entry itself (when not compressed), or an input (when enqueuing), which involves complicated multiplexers and a large amount of wiring resources, resulting in an increased area. On the other hand, once a certain instruction is issued, all instructions behind that instruction have to be moved, which increases the power consumption of data movement.

Furthermore, as shown in Fig. 3, there is further a non-compressed structure of the issue queue, in which each time an instruction exits the issue queue, other instructions are not moved but remain at their original positions, so that the instructions in the queue are no longer arranged in the order of "newest → oldest", and thereby a very complex design of the arbitration circuit is required to implement the oldest-first issuing method. Furthermore, since free positions are distributed irregularly in the non-compressed-type queue, it is not easy to find a free position for a newly sent instruction, which also increases the design complexity of the allocation circuit.

In view of this, the present application provides an instruction issuing method based on compressed issue queue, which includes: when the processor issues instructions based on compressed issue queue, storing an instruction to be processed in an instruction buffer of a compressed issue queue, and adding an available pointer associated with the instruction to be processed into a pointer shift queue of the compressed issue queue, wherein the available pointer is popped from a head of a pointer freelist of the compressed issue queue; determining, when the instruction to be processed meets a dequeue condition, an order of the available pointer in the pointer shift queue; and issuing, according to the order, the instruction to be processed from the instruction buffer to a corresponding function unit for processing, and recycling the available pointer from the pointer shift queue to the tail of the pointer freelist.

Therefore, in the present application, instructions having a large bit width reside in the instruction buffer of the compressed issue queue, while an instruction meeting a dequeue condition is selected from the instruction buffer by a pointer to issue (output). As such, the issue of a certain instruction to the function unit will not cause movement of other instructions, and therefore, a large amount of power consumption otherwise consumed by the processor for moving the instructions in the queue is effectively saved.

In addition, the compressed issue queue used in the present application can also reduce the implementation complexity of the allocation circuit and the arbitration circuit, thereby increasing the circuit frequency of each function circuit (such as the issuing circuit, the arbitration circuit and the allocation circuit) in the processor.

On the basis of the overall concept of the instruction issuing method based on compressed issue queue of the present application, various embodiments of the instruction issuing method based on compressed issue queue of the present application are further provided. In various embodiments of the present application, the instruction issuing method based on compressed issue queue of the present application may be applied to a processor of the terminal device as described above. However, the instruction issuing method based on compressed issue queue can also be applied to other processors, such as a processor of a data center server.

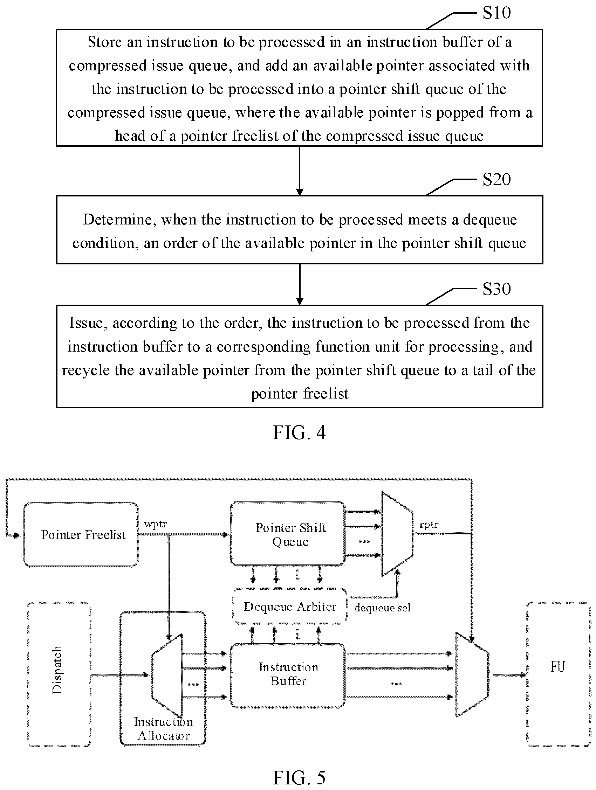

Referring to FIG. 4, a schematic flowchart of a first embodiment of an instruction issuing method based on compressed issue queue according to the present application is shown. It should be noted that although a logical order is shown in the flowchart, in some cases, the shown or described operations of the instruction issuing method based on compressed issue queue may also be performed in a different order than the shown order.

As shown in FIG. 4, an instruction issuing method based on compressed issue queue according to a first embodiment of the present application may include the following operations S10 to S30.

At operation S10, storing an instruction to be processed in an instruction buffer of a compressed issue queue, and adding an available pointer associated with the instruction to be processed into a pointer shift queue of the compressed issue queue, wherein the available pointer is popped from a head of a pointer freelist of the compressed issue queue.

In this embodiment, when the processor issues instructions based on compressed issue queue, the terminal device stores the received instruction to be processed in an instruction buffer of the compressed issue queue, and adds an available pointer associated with the instruction to be processed and popped from the head of the pointer freelist of the compressed issue queue at a current moment to a pointer shift queue of the compressed issue queue for further processing.

It should be noted that, in this embodiment, the compressed issue queue may be a pointer-based compressed-type out-of-order issue queue, and as shown in FIG. 5, this issue queue includes: a pointer freelist, a pointer shift queue, an instruction buffer, a dequeue arbiter, and an instruction allocator. Here, the pointer shift queue is similar to the compressed issue queue shown in FIG. 2, but only pointers (having smaller bit width) are stored therein, while instructions (having lager bit width) are stored in the instruction buffer, and are selected and output by pointers output from the pointer shift queue in the instruction buffer. Based on such a structural design, in the present application, it is specifically the small bit-width pointers, instead of the large bit-width instructions, are "compressed" in the compressed issue queue, which has obvious power consumption advantages over the conventional compressed issue queue.

In addition, the above-mentioned pointer freelist is a first in first out (FIFO) queue for storing available pointers indicating free positions in the instruction buffer. According to a free available pointer issued from the pointer freelist, the instruction allocator stores a new instruction to be processed to an instruction buffer position pointed to by the available pointer.

At operation S20, determining, when the instruction to be processed meets a dequeue condition, an order of the available pointer in the pointer shift queue.

In this embodiment, the processor of the terminal device, after storing the instruction to be processed in the instruction buffer of the compressed issue queue, and synchronously adding the available pointer associated with the instruction into the pointer shift queue of the compressed issue queue, further determines, once the instruction arbiter of the compressed issue queue determines that the instruction to be processed meets a dequeue condition at the current moment, an order of the available pointer in the pointer shift queue at this moment.

At operation S30, issuing, according to the order, the instruction to be processed from the instruction buffer to a corresponding function unit for processing, and recycling the available pointer from the pointer shift queue to the tail of the pointer freelist.

In this embodiment, after the instruction arbiter of the compressed issue queue determines that the instruction to be processed meets the dequeue condition at the current moment and the processor of the terminal device determines the order of the available pointer associated with the instruction in the pointer shift queue, the processor issues the instruction to be processed to the corresponding function unit for processing through the instruction buffer in the compressed issue queue according to the order, and then, the processor further recycles the available pointer associated with the instruction to be processed, that is, re-adds the available pointer to the tail of the pointer freelist in the compressed issue queue, so that upon receiving a new instruction to be processed, the processor continues to store the instruction to be processed into the instruction buffer based on the available pointer popped out in order in the pointer freelist for subsequent processing.

It should be noted that, in this embodiment, the dequeue arbiter in the compressed issue queue used by the processor of the terminal device receives information of valid pointers from the pointer shift queue, selects valid instructions to be processed from the instruction buffer for arbitration based on the valid pointer information, performs arbitration according to the oldest-first method based on the ready states of the respective instructions, and generates an arbitration selection signal ("dequeue sel" in the figure). Then, the instruction buffer in the compressed issue queue may select a corresponding instruction to be processed according to the available pointer output from the pointer shift queue, and issue the instruction to the function unit (FU) for processing.

In this embodiment, when the processor issues instructions based on compressed issue queue, the terminal device stores the received instruction to be processed in an instruction buffer of the compressed issue queue, and adds an available pointer associated with the instruction to be processed and popped from a head of a pointer freelist of the compressed issue queue at a current moment to a pointer shift queue of the compressed issue queue for further processing. After that, once the instruction arbiter of the compressed issue queue determines that the instruction to be processed meets a dequeue condition, the processor further determines an order of the available pointer in the pointer shift queue at the current moment. Finally, the processor issues the instruction to be processed to the corresponding function unit for processing using the instruction buffer in the compressed issue queue according to the determined order, and then further recycles the available pointer associated with the instruction to be processed, that is, re-adds the available pointer to the tail of the pointer freelist in the compressed issue queue, so that upon receiving a new instruction to be processed, the processor continues to store the instruction to be processed into the instruction buffer based on the available pointer popped out in order in the pointer freelist for subsequent processing.

Therefore, the present application can make the instructions having a large bit width reside in the instruction buffer of the compressed issue queue, and select an instruction meeting a dequeue condition from the instruction buffer to output. As such, the issue of a certain instruction to the function unit will not cause movement of other instructions, and therefore, a large amount of power consumption otherwise consumed by the processor for moving the instructions in the queue is effectively saved.

In addition, the compressed issue queue used in the present application can also reduce the implementation complexity of the allocation circuit and the arbitration circuit, thereby increasing the circuit frequency of each function circuit (such as the issuing circuit, the arbitration circuit and the allocation circuit) in the processor.

Further, on the basis of the first embodiment of the instruction issuing method based on compressed issue queue, a second embodiment of an instruction issuing method based on compressed issue queue is provided.

The second embodiment is different from the first embodiment in that, after recycling the available pointer from the pointer shift queue to the tail of the pointer freelist, the instruction issuing method based on compressed issue queue may further include the following operations S40 and S50.

At operation S40, determining, according to the order, whether there are any remaining pointers behind the available pointer in the pointer shift queue.

In this embodiment, after issuing the instruction to be processed from the instructions in the compressed issue queue to the corresponding function unit for processing, and recycling the available pointer associated with the instruction to be processed, the processor of the terminal device further determines, based on an order of the available pointer in the pointer shift queue, whether there are any remaining pointers behind the available pointer in the pointer shift queue at the current moment.

At operation S50, in response to determining that there are remaining pointers behind the available pointer in the pointer shift queue, compressing the remaining pointers.

In this embodiment, upon determining that at the current moment there are remaining pointers behind the available pointer in the pointer shift queue of the compressed issue queue, the processor of the terminal device immediately compresses the remaining pointers.

Illustratively, when the dequeue arbiter of the compressed issue queue selects 1 as the available pointer from the pointer shift queue [-,2,1,0], it means that the instruction to be processed associated with the available pointer 1 and thus stored on address 1 in the instruction buffer is to be dequeued; after the instruction buffer issues and thus dequeue the instruction to be processed to the corresponding function unit for processing, the pointer shift queue further "compresses" one or more remaining pointers behind the available pointer. In other words, the pointer 2, which is arranged behind the available pointer 1, is moved so that the content of the pointer shift queue becomes [-,-,2,0], while the pointer 1 has been "recycled" to the tail of the pointer freelist, and the instruction buffer does not need to "compress" the remaining instructions to be processed.

As can be seen, when the instruction to be processed is dequeued and issued to the function unit for processing, the compressed issue queue used by the terminal device only needs to "compress" the pointers having a small bit width, while the instructions having a large bit width still reside in the original position, so that the dynamic power consumption caused by data movement can be greatly reduced.

Further, based on the first and/or second embodiments of the instruction issuing method based on compressed issue queue of the present application, a third embodiment of an instruction issuing method based on compressed issue queue according to the present application is provided.

The third embodiment is different from the first and second embodiments in that, the step of storing an instruction to be processed in an instruction buffer of the compressed issue queue in the above operation S10 may include the following operations S101 to S102.

At operation S101, establishing, upon receiving the instruction to be processed, an association relationship between the instruction to be processed and the available pointer, wherein the available pointer is popped from the head of the pointer freelist at a current moment.

At operation S102, determining a buffer address pointed to by the available pointer in the instruction buffer of the compressed issue queue, and storing the instruction to be processed on the buffer address.

In this embodiment, upon receiving an instruction to be processed, the processor of the terminal device determines that the instruction to be processed needs to enter the compressed issue queue adopted by the processor itself at the current moment, so that the processor establishes a one-to-one association relationship between available pointers popped from the head of the pointer freelist of the compressed issue queue at the current moment and the instructions to be processed. Then, based on the available pointer, the processor further determines in the instruction buffer of the compressed issue queue a buffer address pointed to by the available pointer, and thus stores the instruction to be processed on the buffer address.

Optionally, in this embodiment, the step of adding the available pointer associated with the instruction to be processed into the pointer shift queue of the compressed issue queue in the above operation S10 may further include the following operations S103 and S104.

At operation S103, determining, from entries in the pointer shift queue of the compressed issue queue, the first target entry arranged immediately behind entries containing pointers.

At operation S104, adding the available pointer associated with the instruction to be processed to the target entry.

In this embodiment, the processor of the terminal device determines, in the instruction buffer of the compressed issue queue adopted, buffer addresses pointed to by the available pointers which are in one-to-one correspondence with the currently received instructions to be processed, so that while the instructions to be processed are stored on the buffer address, the available pointers are also added to the entries of the pointer shift queue of the compressed issue queue synchronously or asynchronously. In other words, the processor firstly determines, in entries of the pointer shift queue, a first target entry arranged immediately behind entries containing pointers, and then adds the available pointer to the target entry.

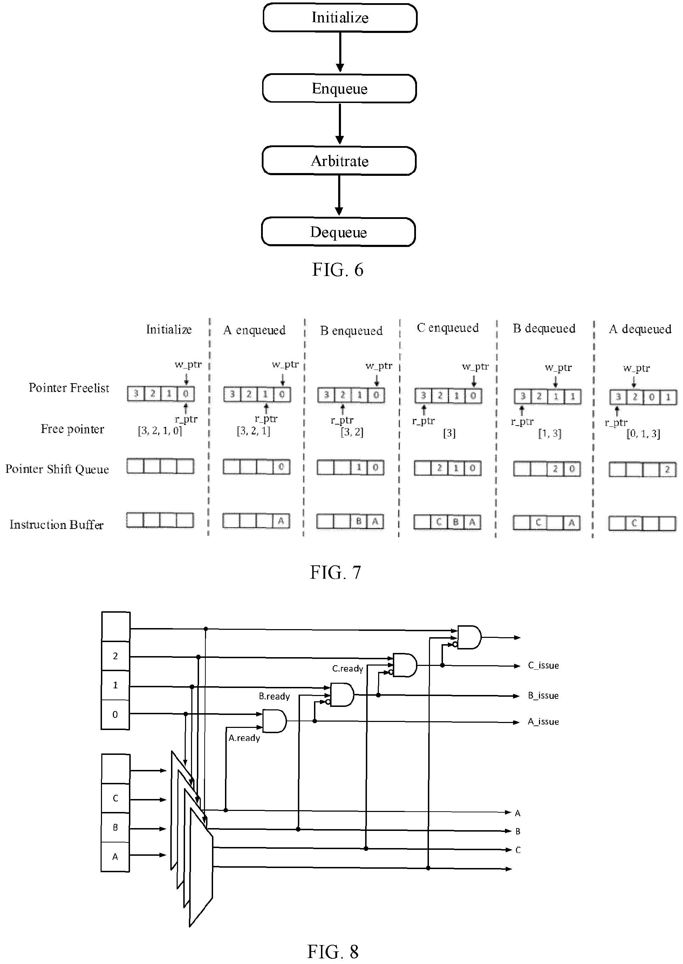

Illustratively, as shown in FIGs. 6 and 7, after the processor of the terminal device completes initialization, in the process of instruction enqueuing for received instructions to be processed: when enqueuing the first instruction A, the processor pops head pointer 0 from the pointer freelist, stores this pointer in the pointer shift queue, and at the same time stores the instruction A on address position 0 in the instruction buffer; and after A is enqueued, the contents of the free pointer, the pointer shift queue, and the instruction buffer are [-,3,2,1], [-,-,-,0] and [-,-,-,A], respectively. When enqueuing the second instruction B, the processor pops head pointer 1 (now pointer 1 is the head pointer) from the pointer freelist, stores this pointer in the pointer shift queue, and at the same time stores the instruction B on an address position 1 in the instruction buffer; and after B is enqueued, the contents of the free pointer, the pointer shift queue, and the instruction buffer are [-,-,3,2], [-,-,1,0] and [-,-,B,A], respectively. When enqueuing the third instruction C, the processor pops head pointer 2 (now pointer 2 is the head pointer) from the pointer freelist, stores this pointer in the pointer shift queue, and at the same time stores the instruction C on address position 2 in the instruction buffer, and after C is enqueued, the contents of the free pointer, the pointer shift queue, and the instruction buffer are [-,-,-,3], [-,2,1,0] and [-,C,B,A], respectively.

In a feasible embodiment, before the above step of "adding the available pointer associated with the instruction to be processed into the pointer shift queue of the compressed issue queue", the instruction issuing method based on compressed issue queue of the present application may further include: operation A, initializing the pointer freelist of the compressed issue queue to make all entries in the pointer freelist be in a full state.

In this embodiment, before adding the received instruction to be processed to the compressed issue queue, the processor of the terminal device further initializes the compressed issue queue such that entries in the pointer freelist of the compressed issue queue are in a full state.

Optionally, in this embodiment, the above-mentioned "full state" is a state in which each entry in the pointer freelist has a pointer stored thereon. On this basis, the instruction issuing method based on compressed issue queue may further include: operation B, upon receiving the instruction to be processed, popping a pointer stored on an entry arranged at a head of the entries (the head entry) as a free available pointer.

In this embodiment, in the case where each entry in the pointer freelist of the compressed issue queue is in a full state, the processor of the terminal device, upon receiving an instruction to be processed, pops a pointer arranged at the head of the pointer freelist at the current moment and takes this head pointer as an available pointer, thereby establishing a one-to-one association relationship between the available pointers and the received instructions to be processed.

Illustratively, as shown in FIG. 6, when initializing the compressed issue queue adopted, the processor of the terminal device needs to initialize each entry in the pointer freelist of the compressed issue queue. As shown in FIG. 7, taking an issue queue including 4 entries as an example, the processor needs to initialize the entries in the pointer freelist to [3,2,1,0] when performing initialization, that is, the pointer freelist and the entries therein are in a full state.

As such, after completing the initialization, when enqueuing the first instruction A, the processor pops head pointer 0 from the pointer freelist, stores this pointer in the pointer shift queue, and at the same time stores the instruction A on address position 0 in the instruction buffer; and after A is enqueued, the contents of the free pointer, the pointer shift queue, and the instruction buffer are [-,3,2,1], [-,-,-,0] and [-,-,-,A], respectively. When enqueuing the second instruction B, the processor pops head pointer 1 (now pointer 1 is the head pointer) from the pointer freelist, stores this pointer in the pointer shift queue, and at the same time stores the instruction B on an address position 1 in the instruction buffer; and after B is enqueued, the contents of the free pointer, the pointer shift queue, and the instruction buffer are [-,-,3,2], [-,-,1,0] and [-,-,B,A], respectively. When enqueuing the third instruction C, the processor pops head pointer 2 (now pointer 2 is the head pointer) from the pointer freelist, stores this pointer in the pointer shift queue, and at the same time stores the instruction C on address position 2 in the instruction buffer, and after C is enqueued, the contents of the free pointer, the pointer shift queue, and the instruction buffer are [-,-,-,3], [-,2,1,0] and [-,C,B,A], respectively.

In addition, when operations of the processor of the terminal device proceed to the process of "instruction arbitration" performed by the dequeue arbiter of the compressed issue queue adopted, after the instructions A, B, C are all enqueued, the dequeue arbiter checks the dequeue condition for each instruction, and if all source operands required by an instruction are ready and the corresponding function unit is free, the dequeue condition is met. As shown in FIG. 8, if at the current moment A does not meet the dequeue condition (A. ready=0) while both B and C meet the dequeue condition (B. ready=1, C. ready=1), one of B or C will be selected and dequeued through arbitration, and the dequeue arbiter follows the oldest-first method. Since the compressed issue queue is naturally arranged in an order of "newest → oldest", B will be selected to be dequeued by the arbitration circuit. If A meets the dequeue condition after B is dequeued, A will be selected to be dequeued in the same way, and finally only C is left.

Further, in a feasible embodiment, the step of recycling the available pointer from the pointer shift queue to the tail of the pointer freelist in the above operation S30 may include the following operations S301 to S302.

At operation S301, determining an empty entry arranged at the tail of the pointer freelist from the entries in the pointer freelist.

At operation S302, storing the available pointer on the empty entry to recycle the available pointer from the pointer shift queue to the tail of the pointer freelist.

In this embodiment, when recycling a pointer in the pointer shift queue, the processor of the terminal device firstly determines, from entries of the pointer freelist of the compressed issue queue adopted, an empty entry at the tail of the pointer freelist, and then stores the available pointer to be recycled on the empty entry, so that the processor recycles the available pointer from the pointer shift queue to the tail of the pointer freelist.

Illustratively, as shown in FIGs. 6 and 7, in the process of "instruction dequeue", the processor of the terminal device needs to complete two operations, that is, a first operation of selecting, based on a pointer selected from the pointer shift queue by the dequeue arbiter, a corresponding instruction from the instruction buffer and issuing the instruction to a function unit; and a second operation of "recycling" the pointer selected from the pointer shift queue, i.e., storing the pointer to the tail of the pointer freelist. For example, when the pointer 1 is selected from the pointer shift queue by the dequeue arbiter, it means that the instruction on address 1, i.e., B, in the instruction buffer is to be dequeued, and after B is dequeued, the pointer shift queue "compresses" the remaining pointers, the content thereof becoming [-,-,2,0], while the instruction buffer does not need to "compress" the remaining instructions, the content thereof being [-,C,-,A], and the pointer 1 is "recycled" to the tail of the pointer freelist, the content becoming [-,-,1,3]. When the pointer 0 is selected from the pointer shift queue by the arbitration circuit, it means that the instruction on address 0, i.e., A, in the instruction buffer is to be dequeued, and after A is dequeued, the pointer shift queue performs "compression", the content thereof becoming [-,-,-,2], while the instruction buffer does not perform "compression", the content thereof being [-,C,-,-], and the pointer 0 is "recycled" to the tail of the pointer freelist, the content thereof becoming [-,0,1,3].

In this embodiment, based on the technical idea of compressing pointers instead of instructions, the instruction issuing method based on compressed issue queue of the present application stores small bit-width pointers indicating positions in the instruction buffer in the compressed issue queue to be "compressed", while making the large bit-width instructions resident in the instruction buffer and then selected and output through the pointer, so that the issue of a certain instruction will not cause movement of other instructions, and thus a large amount of power consumption caused by instruction movement is saved. Further, the structure of the compressed issue queue in the present application can also reduce the implementation complexity of the allocation circuit and the arbitration circuit, thereby increasing the circuit frequency.

In addition, the present application further provides an instruction issuing apparatus based on compressed issue queue.

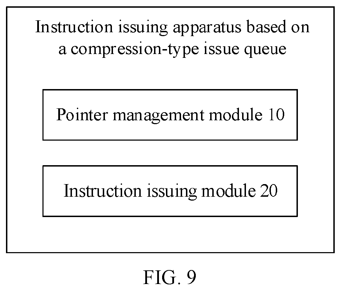

As shown in FIG. 9, the instruction issuing apparatus based on compressed issue queue of the present application includes a pointer management module 10 and an instruction issuing module 20.

The pointer management module 10 is configured to store an instruction to be processed in an instruction buffer of a compressed issue queue, and add an available pointer associated with the instruction to be processed into a pointer shift queue of the compressed issue queue, wherein the available pointer is popped from a head of a pointer freelist of the compressed issue queue.

The instruction issuing module 20 is configured to determine, when the instruction to be processed meets a dequeue condition, an order of the available pointer in the pointer shift queue; and issue, according to the order, the instruction to be processed from the instruction buffer to a corresponding function unit for processing, and recycle the available pointer from the pointer shift queue to the tail of the pointer freelist.

In some feasible embodiments, the instruction issuing apparatus based on compressed issue queue of the present application further includes a pointer compression module. The pointer compression module is configured to: determine, according to the order, whether there are any remaining pointers behind the available pointer in the pointer shift queue; and compress the remaining pointer upon determining that the pointer shift queue has a remaining pointer behind the available pointer.

In some feasible embodiments, the pointer management module 10 is further configured to establish, upon receiving an instruction to be processed, an association relationship between the instruction to be processed and the available pointer, wherein the available pointer is popped from the head of the pointer freelist at a current moment; and determine a buffer address pointed to by the available pointer in the instruction buffer of the compressed issue queue, and store the instruction to be processed on the buffer address.

In some feasible embodiments, the pointer management module 10 is further configured to determine, in entries of a pointer shift queue of the compressed issue queue, a first target entry arranged immediately behind entries containing pointers; and add the available pointer associated with the instruction to be processed to the target entry.

In some feasible embodiments, the instruction issuing apparatus based on compressed issue queue of the present application further includes an initialization module. The initialization module is configured to: initialize the pointer freelist of the compressed issue queue to make all entries in the pointer freelist be in a full state.

In some feasible embodiments, the full state is a state in which each entry in the pointer freelist has a pointer stored thereon, and the pointer management module 10 in the instruction issuing apparatus based on compressed issue queue of the present application is further configured to, upon receiving the instruction to be processed, pop a pointer stored on a head entry of the entries as a free available pointer.

In some feasible embodiments, the instruction issuing module 20 in the instruction issuing apparatus based on compressed issue queue of the present application is further configured to determine an empty entry at the tail of the pointer freelist from the entries in the pointer freelist; and store the available pointer on the empty entry to recycle the available pointer from the pointer shift queue to the tail of the pointer freelist.

The specific embodiments of the various function modules in the instruction issuing apparatus based on compressed issue queue of the present application are substantially the same as the embodiments of the instruction issuing method based on compressed issue queue, and thus are not repeated here.

The present application further provides a computer storage medium having an instruction issuing program based on compressed issue queue stored thereon which, when executed by a processor, causes operations of the instruction issuing method based on compressed issue queue according to any one of the above embodiments to be implemented.

The specific embodiments of the computer storage medium of the present application are substantially the same as the embodiments of the instruction issuing method based on compressed issue queue, and thus are not repeated here.

The present application further provides a computer program product including a computer program which, when executed by a processor, causes operations of the instruction issuing method based on compressed issue queue according to any one of the above embodiments to be implemented.

The specific embodiments of the computer program product of the present application are substantially the same as the embodiments of the instruction issuing method based on compressed issue queue, and thus are not repeated here.

The above are merely preferred embodiments of the present application, and not intended to limit the scope of the present application, and all equivalent structure or process variations, which can be made from the content of the specification and drawings of the present application and can be directly or indirectly applied to other related technical fields, shall similarly fall within the scope of patent protection of the present application.

## Claims

1. An instruction issuing method based on compressed issue queue, comprising:
storing an instruction to be processed in an instruction buffer of a compressed issue queue, and adding an available pointer associated with the instruction to be processed into a pointer shift queue of the compressed issue queue, wherein the available pointer is popped from a head of a pointer freelist of the compressed issue queue;
determining, when the instruction to be processed meets a dequeue condition, an order of the available pointer in the pointer shift queue; and
issuing, according to the order, the instruction to be processed from the instruction buffer to a corresponding function unit for processing, and recycling the available pointer from the pointer shift queue to a tail of the pointer freelist.

2. The instruction issuing method according to claim 1, wherein after recycling the available pointer from the pointer shift queue to the tail of the pointer freelist, the method further comprises:
determining, according to the order, whether there are any remaining pointers behind the available pointer in the pointer shift queue; and
in response to determining that there are remaining pointers behind the available pointer in the pointer shift queue, compressing the remaining pointers.

3. The instruction issuing method according to claim 1, wherein storing the instruction to be processed in the instruction buffer of the compressed issue queue comprises:
establishing, upon receiving an instruction to be processed, an association relationship between the instruction to be processed and the available pointer, wherein the available pointer is popped from the head of the pointer freelist at a current moment; and
determining a buffer address pointed to by the available pointer in the instruction buffer of the compressed issue queue, and storing the instruction to be processed on the buffer address.

4. The instruction issuing method according to claim 1, wherein adding the available pointer associated with the instruction to be processed into the pointer shift queue of the compressed issue queue comprises:
determining, in entries of a pointer shift queue of the compressed issue queue, a first target entry arranged immediately behind entries containing pointers; and
adding the available pointer associated with the instruction to be processed to the target entry.

5. The instruction issuing method according to claim 1, wherein before adding the available pointer associated with the instruction to be processed into the pointer shift queue of the compressed issue queue, the method further comprises:
initializing the pointer freelist of the compressed issue queue to make all entries in the pointer freelist be in a full state.

6. The instruction issuing method according to claim 5, wherein the full state is a state in which each entry in the pointer freelist has a pointer stored thereon, and the method further comprises:
upon receiving the instruction to be processed, popping a pointer stored on a head entry of the entries as a free available pointer.

7. The instruction issuing method according to any one of claims 1 to 6, wherein recycling the available pointer from the pointer shift queue to the tail of the pointer freelist comprises:
determining an empty entry at the tail of the pointer freelist from the entries in the pointer freelist; and
storing the available pointer on the empty entry to recycle the available pointer from the pointer shift queue to a tail of the pointer freelist.

8. An instruction issuing apparatus based on compressed issue queue, the apparatus comprising:
a pointer management module configured to store an instruction to be processed in an instruction buffer of a compressed issue queue, and add an available pointer associated with the instruction to be processed into a pointer shift queue of the compressed issue queue, wherein the available pointer is popped from a head of a pointer freelist of the compressed issue queue;
an instruction issuing module configured to determine, when the instruction to be processed meets a dequeue condition, an order of the available pointer in the pointer shift queue; and issue, according to the order, the instruction to be processed from the instruction buffer to a corresponding function unit for processing, and recycle the available pointer from the pointer shift queue to a tail of the pointer freelist.

9. A terminal device, comprising: a memory, a processor, and an instruction issuing program based on compressed issue queue, which is stored on the memory and executable by the processor, wherein the instruction issuing program based on compressed issue queue, when executed by the processor, causes operations of the instruction issuing method based on compressed issue queue according to any one of claims 1 to 7 to be implemented.

10. A computer storage medium having an instruction issuing program based on compressed issue queue stored thereon which, when executed by a processor, causes operations of the instruction issuing method based on compressed issue queue according to any one of claims 1 to 7 to be implemented.
